# EUROPEAN PATENT APPLICATION

(11) **EP 4 485 386 A1**
(43) Date of publication of application: **01.01.2025**
(21) Application number: 23182736.1
(22) Date of filing: 30.06.2023
(51) Int. Cl.: G06V 20/52

(54) **OPERATING A MINING VEHICLE WITHIN AN UNDERGROUND WORKING AREA**

(71) Applicant: Sandvik Mining and Construction Oy, 33330 Tampere (FI)
(72) Inventor: SNELLMAN, Olli, 33311 Tampere (FI); SVENSBERG, Ville, 33311 Tampere (FI)
(74) Representative: Sandvik

(57) **Abstract**

Disclosed is a method for monitoring an environment of a mining vehicle within an underground working area monitored by a monitoring system, the method comprising: obtaining first sensing data regarding the environment of the mining vehicle, wherein the first sensing data comprises data relating to the environment of the mining vehicle upon approaching an area by the mining vehicle, obtaining second sensing data regarding the environment of the mining vehicle, after obtaining the first sensing data, wherein the second sensing data comprises data relating to the environment of the mining vehicle upon passing the area by the mining vehicle, performing a comparison of the first sensing data and the second sensing data, detecting, based on the comparison of the first sensing data and the second sensing data, that the second sensing data comprises a difference compared to the first sensing data, wherein the difference is with respect to a location within the area, and providing an indication regarding the difference to the monitoring system.

## Description

### Field

The present application relates to operating a mining vehicle within an underground working area. More specifically, the present application relates to monitoring an environment of the mining vehicle and detecting, based on a comparison of a first sensing data and a second sensing data, if the second sensing data comprises a difference compared to the first sensing data.

### Background

In an underground working area, such as a mine, there may be different types of vehicles operating and the operating area for such vehicles is to be safe. As a part of safety, it is desirable to ensure that there are no unwanted objects that could cause disturbance to one or more vehicles, such as mining vehicles, operating within the underground operating area.

### Brief Description

The scope of protection sought for various embodiments of the invention is set out by the independent claims. The example embodiments and features, if any, described in this specification that do not fall under the scope of the independent claims are to be interpreted as examples useful for understanding various embodiments of the invention.

According to a first aspect there is provided an apparatus for monitoring an environment of a mining vehicle within an underground working area monitored by a monitoring system, the apparatus comprising means for: obtaining first sensing data regarding the environment of the mining vehicle, wherein the first sensing data comprises data relating to the environment of the mining vehicle upon approaching an area by the mining vehicle, obtaining second sensing data regarding the environment of the mining vehicle, after obtaining the first sensing data, wherein the second sensing data comprises data relating to the environment of the mining vehicle upon passing the area by the mining vehicle, performing a comparison of the first sensing data and the second sensing data, detecting, based on the comparison of the first sensing data and the second sensing data, that the second sensing data comprises a difference compared to the first sensing data, wherein the difference is with respect to a location within the area, and providing an indication regarding the difference to the monitoring system.

In some exemplary embodiments according to the first aspect, the means comprises at least one processor, and at least one memory, including a computer program code, wherein the at least one memory and the computer program code are configured, with the at least one processor, to cause the performance of the apparatus.

According to a second aspect there is provided an apparatus for monitoring an environment of a mining vehicle within an underground working area monitored by a monitoring system, the apparatus comprising at least one processor, and at least one memory including a computer program code, wherein the at least one memory and the computer program code are configured, with the at least one processor, to cause the apparatus to: obtain first sensing data regarding the environment of the mining vehicle, wherein the first sensing data comprises data relating to the environment of the mining vehicle upon approaching an area by the mining vehicle, obtain second sensing data regarding the environment of the mining vehicle, after obtaining the first sensing data, wherein the second sensing data comprises data relating to the environment of the mining vehicle upon passing the area by the mining vehicle, perform a comparison of the first sensing data and the second sensing data, detect, based on the comparison of the first sensing data and the second sensing data, that the second sensing data comprises a difference compared to the first sensing data, wherein the difference is with respect to a location within the area, and provide an indication regarding the difference to the monitoring system.

According to a third aspect there is provided a method for monitoring an environment of a mining vehicle within an underground working area monitored by a monitoring system, the method comprising: obtaining first sensing data regarding the environment of the mining vehicle, wherein the first sensing data comprises data relating to the environment of the mining vehicle upon approaching an area by the mining vehicle, obtaining second sensing data regarding the environment of the mining vehicle, after obtaining the first sensing data, wherein the second sensing data comprises data relating to the environment of the mining vehicle upon passing the area by the mining vehicle, performing a comparison of the first sensing data and the second sensing data, detecting, based on the comparison of the first sensing data and the second sensing data, that the second sensing data comprises a difference compared to the first sensing data, wherein the difference is with respect to a location within the area, and providing an indication regarding the difference to the monitoring system.

In some example embodiments according to the third aspect, the method is a computer-implemented method.

According to a fourth aspect there is provided a computer program comprising instructions for causing an apparatus, that is for monitoring an environment of a mining vehicle within an underground working area monitored by a monitoring system, to perform at least the following: obtain first sensing data regarding the environment of the mining vehicle, wherein the first sensing data comprises data relating to the environment of the mining vehicle upon approaching an area by the mining vehicle, obtain second sensing data regarding the environment of the mining vehicle, after obtaining the first sensing data, wherein the second sensing data comprises data relating to the environment of the mining vehicle upon passing the area by the mining vehicle, perform a comparison of the first sensing data and the second sensing data, detect, based on the comparison of the first sensing data and the second sensing data, that the second sensing data comprises a difference compared to the first sensing data, wherein the difference is with respect to a location within the area, and provide an indication regarding the difference to the monitoring system.

According to a fifth aspect there is provided a computer program comprising instructions stored thereon for monitoring an environment of a mining vehicle within an underground working area monitored by a monitoring system, wherein instructions are for performing at least the following: obtaining first sensing data regarding the environment of the mining vehicle, wherein the first sensing data comprises data relating to the environment of the mining vehicle upon approaching an area by the mining vehicle, obtaining second sensing data regarding the environment of the mining vehicle, after obtaining the first sensing data, wherein the second sensing data comprises data relating to the environment of the mining vehicle upon passing the area by the mining vehicle, performing a comparison of the first sensing data and the second sensing data, detecting, based on the comparison of the first sensing data and the second sensing data, that the second sensing data comprises a difference compared to the first sensing data, wherein the difference is with respect to a location within the area, and providing an indication regarding the difference to the monitoring system.

According to a sixth aspect there is provided a non-transitory computer readable medium comprising program instructions for causing an apparatus, that is for monitoring an environment of a mining vehicle within an underground working area monitored by a monitoring system, to perform at least the following: obtain first sensing data regarding the environment of the mining vehicle, wherein the first sensing data comprises data relating to the environment of the mining vehicle upon approaching an area by the mining vehicle, obtain second sensing data regarding the environment of the mining vehicle, after obtaining the first sensing data, wherein the second sensing data comprises data relating to the environment of the mining vehicle upon passing the area by the mining vehicle, perform a comparison of the first sensing data and the second sensing data, detect, based on the comparison of the first sensing data and the second sensing data, that the second sensing data comprises a difference compared to the first sensing data, wherein the difference is with respect to a location within the area, and provide an indication regarding the difference to the monitoring system.

According to a seventh aspect there is provided a non-transitory computer readable medium comprising program instructions stored thereon for monitoring an environment of a mining vehicle within an underground working area monitored by a monitoring system, wherein instructions are for performing at least the following: obtaining first sensing data regarding the environment of the mining vehicle, wherein the first sensing data comprises data relating to the environment of the mining vehicle upon approaching an area by the mining vehicle, obtaining second sensing data regarding the environment of the mining vehicle, after obtaining the first sensing data, wherein the second sensing data comprises data relating to the environment of the mining vehicle upon passing the area by the mining vehicle, performing a comparison of the first sensing data and the second sensing data, detecting, based on the comparison of the first sensing data and the second sensing data, that the second sensing data comprises a difference compared to the first sensing data, wherein the difference is with respect to a location within the area, and providing an indication regarding the difference to the monitoring system.

### List of Drawings

In the following, the invention will be described in greater detail with reference to the embodiments and the accompanying drawings, in which
FIG. 1 illustrates an example embodiment of an underground working area.
FIG. 2 illustrates an example embodiment of a flow chart.
FIG. 3 illustrates an example embodiment of detecting a difference in an area.
FIG. 4 illustrates an example embodiment of an apparatus.

### Description of Embodiments

The following embodiments are exemplifying. Although the specification may refer to "an", "one", or "some" embodiment(s) in several locations of the text, this does not necessarily mean that each reference is made to the same embodiment(s), or that a particular feature only applies to a single embodiment. Single features of different embodiments may also be combined to provide other embodiments.

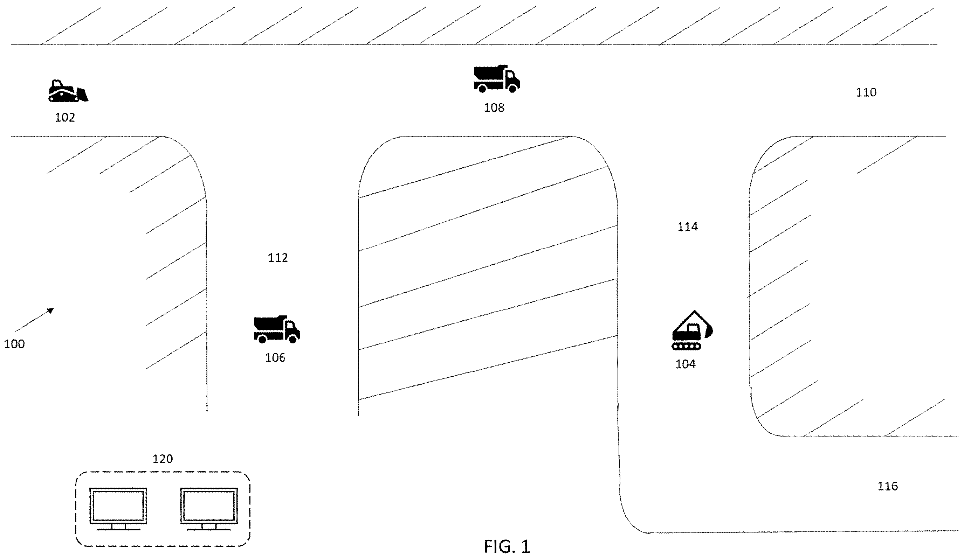

FIG. 1 illustrates an example embodiment of an underground working area 100 such as a mine. It is to be noted that the underground working area 100 illustrated in FIG. 1 is a simplified presentation for the purpose of explanation and that the underground working area 100 may be larger than the part 100 illustrated in FIG. 1. In this example embodiment, the underground working area 100 comprises tunnels such as tunnels 110, 112, 114 and 116 illustrated in FIG. 1. The tunnels may be large enough to facilitate operation of various mining vehicles such as trucks, bulldozers, dumpers, vans, rock drilling or milling rigs, gantry cranes, mobile reinforcement machines, mechanical cutting machines and loaders or any other kind of mining vehicles suitable for performing an operation within the underground working area 100. In this example embodiment, there are mining vehicles 102, 104, 106 and 108. At least some of the mining vehicles 102, 104, 106 and 108 may be automated mining vehicles that can be operated without a driver, or at least some of the mining vehicles 102, 104, 106 and 108 may be operated by a user.

Optionally, the underground working area 100 may comprise areas that are reserved for mining vehicles that are operated automatically. Such an area may be called as an automated working area. In an automated working area, due to safety reasons, it may be that no personnel are allowed to be within, or enter, the automated working area when the automated mining vehicles are operating. Monitoring that there are no personnel within, or entering, the automated working area may be performed using any suitable method. Further optionally, the mining vehicles 102, 104, 106 and 108 may have a limited area within the underground working area 100 within which they operate. And further optionally, at least some of the mining vehicles 102, 104, 106 or 108 are such that they operate on a regular route along at least some of the tunnels 110, 112, 114 and 116.

In this example embodiment the mining vehicles 102, 104, 106 and 108 each comprise a control unit that is connected to a monitoring system 120. The connection may be a wireless connection such as a Wi-Fi based connection. The control unit may be configured to monitor operations of its respective mining vehicle and also provide instructions regarding operations performed by its respective mining vehicle. The monitoring system 120 may be understood as a system that allows a user, who is located for example in a monitoring room of the mining area, to monitor and control overall operations of the underground working area 100. For example, the monitoring system may be configured to present for the user on one or more displays data obtained from various sensors that are located within the underground working area 100 and to also provide controlling instructions to mining vehicles within the working area 100. A map of the underground working area 100 may be stored by the monitoring system 120 and/or by the control units of the mining vehicles 102, 104, 106 and 108. The monitoring system 120 may be configured to keep the map updated and to provide any updates to the map to the control units of the work machines 102, 104, 106 and 108. It is to be noted that an update to a map may be an indication of an update to the map or an update may be the updated map.

The map of the underground working area 100 may be in any suitable format. For example, the map may comprise a reference model of the mine in a mine coordinate system.

Yet, as the underground working area 100 is, at least partly, underground, usage of navigational aiding systems such as global positioning system, GPS, might not be available and thus, locating an object or a mining vehicle on the map may be performed in some other way. Therefore, the map may be obtained for example by utilizing point cloud data based on which a model that may be a three-dimensional (3D) model of the underground working area 100 may be determined. The determination may be performed by any suitable unit, for example, by the monitoring system. As such, the 3D model of the underground working area 100 may comprise point cloud data in a coordinate system used for modelling the underground working area 100. If then other point cloud -based data is received, from a mining vehicle, for example, the received point cloud -based data may be compared to the map to identify a location on the map that corresponds to the received point cloud -based data. If the received data comprises an indication regarding a difference in one or more parts of the underground working area 100, the monitoring system may then update the map accordingly, the map being the 3D model for example.

In general, point cloud data may comprise a plurality of data points representing, for example, distances between the mining vehicle and objects in the environment of the mining vehicle at a given time instance. An individual point comprised in the point cloud may be represented using for example, X and Y coordinates, or X, Y and Z coordinates with respect to the coordinate system used for modelling the underground working area 100.

For example, the mining vehicle that is operating within the underground working area 100 and is driving along a route that is assigned to it, the mining vehicle may comprise at least one sensor configured to scan the environment around the mobile mining vehicle. The at least one sensor may be for example a light detection and ranging (lidar) sensor that is configured to determine a range by targeting an object with a laser and measuring the time for the reflected light to return to the receiver. Alternatively, or additionally, the at least one sensor may comprise a radio detection and ranging (radar) sensor that is configured to transmit electromagnetic energy toward objects and observing the echoes returned from them. Further additionally or alternatively, the at least one sensor configured to scan the environment around the mining vehicle may comprise a time-of-flight (ToF) camera configured to determine a distance between the camera and a subject by measuring a round trip time of an artificial light signal provided by a laser or a light-emitting diode (LED).

In this example embodiment, the mining vehicles 102, 104, 106 and 108 proceed along the tunnels 110, 112, 114 and 116 within the underground working area 100. Proceeding may also be understood as driving. The tunnels might not be horizontal and thus some mining vehicles may be proceeding uphill or downhill. If a mining vehicle such as a truck, proceeds uphill with a full load in its box, it may occur that an object falls from the truck. For example, if a truck proceeds uphill with a full load of rocks, one or more rock may fall from the truck. Yet, this might not be noticed by the truck or its driver.

The truck may comprise a mapping system, a localization system and/or obstacle detection system comprising sensors configured to monitor the driving direction, when the truck moves forward. Monitoring the driving direction may be understood as providing sensing data, that may be visual sensing data, regarding the environment around the truck in a direction that corresponds to the driving direction. If then another mining vehicle proceeds in the same part of the working area in which the object fell from the truck, the other mining vehicle may detect based on data received from its sensors that there is the fallen object. However, if the object is located, for example, right after a turn, the sensors might not provide data indicating the fallen object in time for the other mining vehicle to react. The reaction might not be required if the fallen object is not large enough to cause disturbance, such as damage, to the other mining vehicle. However, if the fallen object is for example a rock that is large enough to cause damage to the other mining vehicle and such damage then occurs, the operation of at least a part of the mine may need to be halted until the damage is fixed, which is expensive and causes unwanted delays.

In addition to an object that may fall from a box of a truck, within an underground working area there may be situations in which a mining vehicle proceeds and causes for example vibrations in the adjacent environment such that one or more objects then fall onto the tunnel behind, or next to the mining vehicle in a direction away from the driving direction of the mining vehicle. For example, the mining vehicle may cause vibrations that cause a rock to fall from the tunnel roof or wall. In this situation as well, the sensing data obtained from the direction of proceeding of the mining vehicle may fail to indicate that there is a fallen object. If the object is large enough, it may then cause damage to the mining vehicles proceeding within the underground working area 100, which is not desirable and therefore would be beneficial if such situation could be prevented. Therefore, if for example the monitoring system 120 receives information that there is a fallen object within the underground working area 100, the monitoring system may then determine characteristics of the fallen object and provide an update to the map of the working area 100 accordingly and also provide the updated map to at least some of the control units of the mining vehicle 102, 104, 106 and 108. Alternatively, the monitoring system might not provide the updated map as such, but data regarding an update to be made to the map to the at least some of the control units of the mining vehicles 102, 104, 106 and 108. The map may then be updated based on the data by any suitable unit or a device. Therefore, a mining vehicle such as a truck may comprise at least one sensing device that provides sensing data located such that the sensing data regarding the environment around the mining vehicle is obtained from a direction that is away from the direction the mining vehicle is proceeding. The direction that is away from the direction the mining vehicle is proceeding to may be understood as a direction that is different from the direction the mining vehicle is proceeding to. Thus, there may be a first direction with respect to the direction the mining vehicle is proceeding to, which may be at least substantially the same as the direction of proceeding, and a second direction, different than the first direction, with respect to the direction the mining vehicle is proceeding to, and the sensing data is obtained from the second direction. For example, having a camera and/or a 3D sensing device at the back of the truck may enable detecting a boulder that has fallen from the box of the truck. As another example, if there is a sensing device providing sensing data on the side of the truck, the object that fall onto the side of the truck may also be detected. Further additionally or alternatively, if the mining vehicle is reversing, then sensing data may be obtained from the environment adjacent to the front of the mining vehicle and thus for example an object that falls due to vibrations may be detected. As a fallen object is detected, an indication may then be provided to the monitoring system 120.

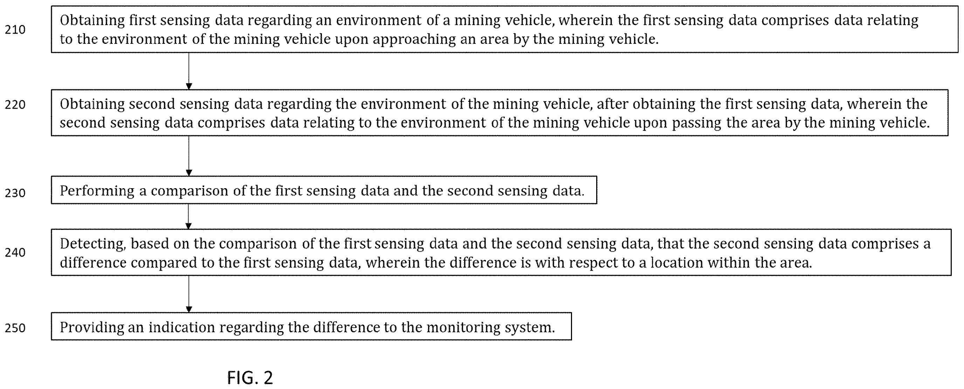

FIG. 2 illustrates an example embodiment of a flow chart that may be performed by a computer implemented method. In block 210, this example embodiment comprises obtaining first sensing data regarding an environment of a mining vehicle, wherein the first sensing data comprises data relating to the environment of the mining vehicle upon approaching an area by the mining vehicle. The mining vehicle may be any mining vehicle that is suitable to operate in an underground working area such as a mine. For example, the mining vehicle may be any of the mining vehicles 102, 104,106 or 108 introduced in the previous example embodiment. The mining vehicle may proceed along a route that is associated for the mining vehicle and the route takes place in one or more tunnels of the underground working area. The route may be a pre-determined route and, optionally, may also be a route that the mining vehicle routinely proceeds along when performing operations within the underground working area. The route may also be specific to the current operation the mining vehicle is performing.

The area to which the mining vehicle approaches may be an area in a direction that is related to a driving direction of the mining vehicle. For example, the area may be along the route of the mining vehicle. The area may be a sub-area comprised in the underground working area. As the mining vehicle drives along the driving direction, the mining vehicle may thus approach the area and then pass the area as the mining vehicle continues to drive in the driving direction. A direction that is away from the driving direction, which is the direction to which the mining vehicle is proceeding to, may be any direction that is not visible to one or more sensing devices that are sensing the environment in the driving direction of the mining vehicle. In general, there may be a first direction with respect to the driving direction and a second direction with respect to the driving direction, that is different than the first direction. The first direction may correspond to the driving direction and the second direction may be a direction away from the driving direction. The detecting may be based on one or more sensing devices along the route, such as three-dimensional (3D) sensing device that obtains 3D sensing data, or a camera. 3D sensing device may be for example a lidar, a device that obtains sensing data based on one or more radars or a device that obtains 3D sensing data based on ultrasound.

Next, in block 220, the example embodiment comprises obtaining second sensing data regarding the environment of the mining vehicle, after obtaining the first sensing data, wherein the second sensing data comprises data relating to the environment of the mining vehicle upon passing the area by the mining vehicle.

Sensing data such as the first sensing data and/or the second sensing data may be obtained for example from a sensing device. A vision-based sensing device may be comprised in, or connected to, the sensing device that provided data based on which the object was detected. Alternatively, detecting the object may trigger another sensing device, that is a vision-based sensing device, to obtain data from the location that is associated with the detected object. For example, if a radar is used to detect the object, then camera may be used to obtain vision-based data, such as an image or a video feed, from the location associated with the object. It is to be noted that in some example embodiments, the vision-based sensing device may be a device that is not comprised in the mining vehicle but is connected to the mining vehicle. The vision-based sensing data may optionally be obtained from more than one vision-based sensing device. For example, from multiple cameras or from a camera and a lidar, etc.

It is to be noted that the sensing device, which is used for detecting the object, and/or the vision-based sensing device, may be connected to a control unit comprised in the work machine and the control unit may be configured to determined, based on the obtained sensing data, if the object has dimensions greater than predefined threshold dimensions. Further optionally, the control unit may be configured to detect the object based on for example image recognition algorithms executed by the control unit. Further, optionally, the control unit may also determine a classification for the object. For example, there may be a dedicated classification for boulders and different classification for pipes. The classification may be obtained based on image recognition algorithms and/or machine learning.

Next, in block 230, the example embodiment comprises performing a comparison of the first sensing data and the second sensing data. Then, in block 240, the example embodiment comprises detecting, based on the comparison of the first sensing data and the second sensing data, that the second sensing data comprises a difference compared to the first sensing data, wherein the difference is with respect to a location within the area. The location within the area may be for example a location of an object, which may be determined by a control unit of the mining vehicle, and it may be determined based on sensing data obtained from the one or more sensing devices. Alternatively, the location of the object may be obtained from another device that is connected to the mining vehicle. Additionally, the indication may comprise further information regarding the object such as its classification and/or its dimensions. Further additionally, the control unit of the mining vehicle may be configured to determine if the object is to be considered as an obstacle and the indication may then also comprise information regarding if the object is an obstacle. The determination that the object is an obstacle may be based on the dimensions of the object and/or the classification of the object or on any other suitable criteria that may be predetermined criteria. In other words, detecting the difference may further comprise detecting that the difference corresponds to dimensions that are greater than predetermined dimensions.

In block 250, the example embodiment comprises providing an indication regarding the difference to the monitoring system. The monitoring system, to which the indication is to be provided, may be a monitoring system such as the monitoring system 120 introduced in the previous example embodiment. It is to be noted that optionally the indication may be provided to other mining vehicles as well. Further, optionally, more than one objects may be detected by the mining vehicle as well.

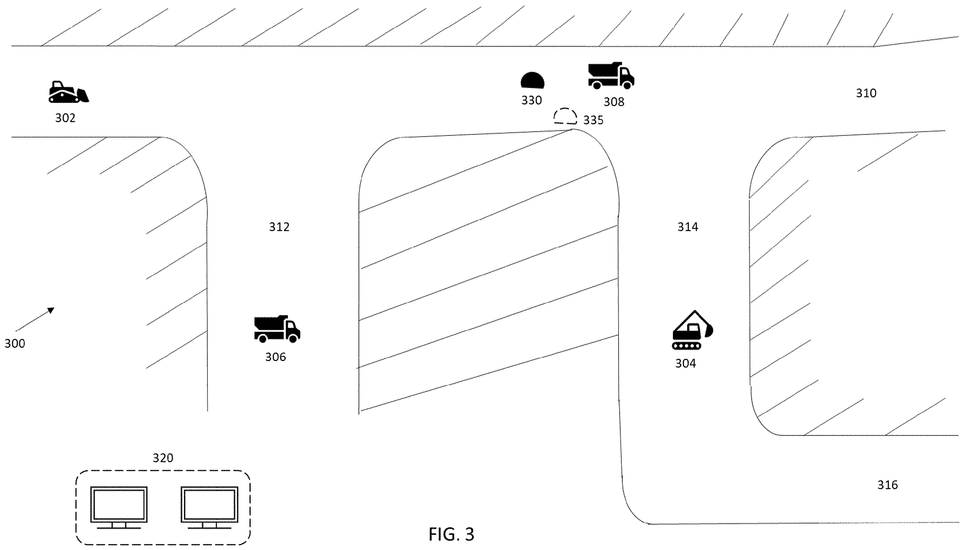

FIG. 3 illustrates an example embodiment of detecting a difference in an area that is approached and also passed by a mining vehicle. The difference may be indicative of an object, and the object may be located in a direction away from a driving direction of a mining vehicle. The direction away from the driving direction is associated with area approached by the mining vehicle. In this example embodiment, there is an underground working area 300, which is a mine, that comprises tunnels 310, 312, 314 and 316. In the underground working area 300, there are also mining vehicle 302, 304, 306 and 308 operating. The mining vehicles 302, 304, 306 and 308 are connected to a monitoring system 320 using their respective control units and a wireless connection. In this example embodiment, the mining vehicles 302, 304, 306 and 308 each drive along their pre-determined route along the tunnels 310, 312, 314 and 316 of the underground working area 300. The mining vehicle 308 is a truck and it has a load of rocks in its box. The route of the work machine 308 comprises driving along the tunnel 310 in an uphill direction. Because of the uphill direction, in this example embodiment, a rock 330 falls out of the box. The mining vehicle 308 comprises a lidar that is pointed in a direction that is away from the driving direction, which in this example embodiment is in the direction of the back of the mining vehicle 308. Additionally, or alternatively, there may also be another sensing device such as a lidar that points to the side of the truck.

In this example embodiment, the lidar provides sensing data based on which the control unit of the mining vehicle 308 detects that there is an object, which in this example embodiment is the rock 330, along the tunnel 310 and that the rock 330 was not there previously. The detection may be based on comparison of two different sensing data. A difference may then be detected based on the comparison and the difference may be determined to be indicative of the rock 330. The two different sensing data may be obtained at different times. The control unit may be configured to determine dimensions of the rock 330 and compare the dimensions with predefined threshold dimensions. In this example embodiment, the control unit determines that the dimensions of the rock 330 are greater than predefined dimensions. In other words, the difference between the first sensing data and the second sensing data may be determined to correspond to dimensions that are greater than predetermined dimensions. As the lidar may be considered as a vision-based sensing device, the control unit then obtains vision-based data associated with the location of the rock 330. Optionally, the control unit may additionally obtain camera data, or other vision-based data associated with the location of the rock 330. The control unit is configured to, based on the data obtained from the lidar, determine the location of the rock 330 and, in this example embodiment, provide an indication to the monitoring system 320, wherein the indication comprises the location of the rock 330 as well as other data determined regarding the rock 330. In this example embodiment, the other data comprises information that the object is the rock 330, which may have been determined based on image recognition, and the dimensions of the rock 330. It is to be noted that the location may be determined based on the data obtained from the lidar and, in some example embodiment, additionally also based on a model, such as a 3D model of the underground working area.

Additionally, in some example embodiments, it may be that also another rock 335 falls from the box of the 308. The mining vehicle 308 may be configured to detect that rock if the other lidar is pointed towards the side of the mining vehicle 308, which in this example embodiment is the location onto which the other rock 335 falls onto. This other rock 335, may be detected as an object like the rock 330, its location and dimensions may also be determined and provided as another indication to the monitoring system 320. The detection of the rock 335 may thus be based on comparing two different sensing data and detecting a difference that corresponds to dimensions that are greater than predetermined dimensions. One of the two different sensing data may comprise data relating to the environment of the mining vehicle upon approaching the area by the mining vehicle. The other one of the two different sensing data may comprise data relating to the environment of the mining vehicle upon passing the area by the mining vehicle.

The monitoring system 320 may be configured to, in response to receiving the indication regarding the detected object, provide the indication to the other mining vehicles 302, 304 and 306 as well. Thus, the other mining vehicles are aware of the detected object such that any possible damage may be avoided. The monitoring system 320 may also be configured to update the map of the underground working area to indicate the detected object.

A benefit that may be obtained by this example embodiment thus may be that a mining vehicle may obtain sensing data from a direction that is away from its driving direction. For example, the mining vehicle may obtain sensing data regarding the backside of the mining vehicle.

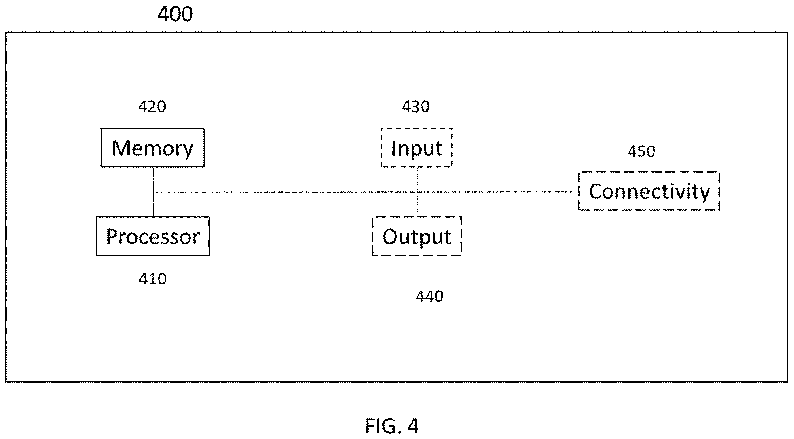

FIG. 4 illustrates an apparatus 400, which may be an apparatus comprised in another device such as a control unit of a mining vehicle. The apparatus 400 may be for monitoring an environment of a mining vehicle within an underground working area monitored by a monitoring system. The apparatus 400 comprises a processor 410. The processor 410 is configured to interpret computer program instructions and process data. The processor 410 may comprise one or more programmable processors. The processor 410 may comprise programmable hardware with embedded firmware and may, alternatively or additionally, comprise one or more application specific integrated circuits, ASICs.

The processor 410 is coupled to a memory 420. The processor is configured to read and write data to and from the memory 420. The memory 420 may comprise one or more memory units. The memory units may be volatile or non-volatile. It is to be noted that in some example embodiments there may be one or more units of non-volatile memory and one or more units of volatile memory or, alternatively, one or more units of non-volatile memory, or, alternatively, one or more units of volatile memory. Volatile memory may be for example RAM, DRAM or SDRAM. Non-volatile memory may be for example ROM, PROM, EEPROM, flash memory, optical storage or magnetic storage. In general, memories may be referred to as non-transitory computer readable media. The memory 420 stores computer readable instructions that are execute by the processor 410. For example, non-volatile memory stores the computer readable instructions and the processor 410 executes the instructions using volatile memory for temporary storage of data and/or instructions.

The computer readable instructions may have been pre-stored to the memory 420 or, alternatively or additionally, they may be received, by the apparatus, via electromagnetic carrier signal and/or may be copied from a physical entity such as computer program product. Execution of the computer readable instructions causes the apparatus 400 to perform functionality described above.

In the context of this document, a "memory" or "computer-readable media" may be any non-transitory media or means that can contain, store, communicate, propagate or transport the instructions for use by or in connection with an instruction execution system, apparatus, or device, such as a computer.

The apparatus 400 is, in some example embodiments, configured to, with the at least one processor, the at least one memory and the computer program code, cause the apparatus to obtain first sensing data regarding the environment of the mining vehicle, wherein the first sensing data comprises data relating to the environment of the mining vehicle upon approaching an area by the mining vehicle. Also, the apparatus 400 is configured to, with the at least one processor, the at least one memory and the computer program code, cause the apparatus to obtain second sensing data regarding the environment of the mining vehicle, after obtaining the first sensing data, wherein the second sensing data comprises data relating to the environment of the mining vehicle upon passing the area by the mining vehicle. Also, the apparatus 400 is configured to, with the at least one processor, the at least one memory and the computer program code, cause the apparatus to perform a comparison of the first sensing data and the second sensing data. Further, the apparatus 400 is configured to, with the at least one processor, the at least one memory and the computer program code, cause the apparatus to detect, based on the comparison of the first sensing data and the second sensing data, that the second sensing data comprises a difference compared to the first sensing data, wherein the difference is with respect to a location within the area. Also, the apparatus 400 is configured to, with the at least one processor, the at least one memory and the computer program code, cause the apparatus to provide an indication regarding the difference to the monitoring system.

The apparatus 400 optionally further comprises, or is connected to, an input unit 430. The input unit 430 comprises one or more interfaces for receiving input such as a user input or input from another device. The one or more interfaces may comprise for example one or more motion and/or orientation sensors, one or more cameras, one or more accelerometers, one or more microphones, one or more buttons and one or more touch detection units. Further, the input unit 430 may comprise an interface to which external devices may connect to.

The apparatus 400 also comprises, optionally, an output unit 440. The output unit comprises or is connected to one or more displays capable of rendering visual content. The output unit 440 may further comprise one or more audio outputs. The one or more audio outputs may be for example loudspeakers or a set of headphones.

The apparatus 400 may further comprise, optionally, a connectivity unit 450. The connectivity unit 450 enables wired and/or wireless connectivity to external networks. The connectivity unit 450 may comprise one or more antennas and one or more receivers that may be integrated to the apparatus 400 or the apparatus 400 may be connected to. The connectivity unit 450 may comprise an integrated circuit or a set of integrated circuits that provide the wireless communication capability for the apparatus 400. Alternatively, the wireless connectivity may be a hardwired application specific integrated circuit, ASIC.

It is to be noted that the apparatus 400 may further comprise various components not illustrated in the FIG. 4. The various components may be hardware components and/or software components.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

## Claims

1. An apparatus for monitoring an environment of a mining vehicle within an underground working area monitored by a monitoring system, the apparatus comprising at least one processor, and at least one memory including a computer program code, wherein the at least one memory and the computer program code are configured, with the at least one processor, to cause the apparatus to:
obtain first sensing data regarding the environment of the mining vehicle, wherein the first sensing data comprises data relating to the environment of the mining vehicle upon approaching an area by the mining vehicle;
obtain second sensing data regarding the environment of the mining vehicle, after obtaining the first sensing data, wherein the second sensing data comprises data relating to the environment of the mining vehicle upon passing the area by the mining vehicle;
perform a comparison of the first sensing data and the second sensing data;
detect, based on the comparison of the first sensing data and the second sensing data, that the second sensing data comprises a difference compared to the first sensing data, wherein the difference is with respect to a location within the area; and
provide an indication regarding the difference to the monitoring system.

2. An apparatus according to claim 1, wherein the first sensing data and the second sensing data are obtained during the mining vehicle driving along a route.

3. An apparatus according to claim 1 or 2, wherein at least the second sensing data is vision-based sensing data.

4. An apparatus according to claim 3, wherein the vision-based sensing data comprises 3D sensing data and/or image data from one or more cameras.

5. An apparatus according to any previous claim, wherein detecting the difference further comprises detecting that the difference corresponds to dimensions that are greater than predetermined dimensions.

6. An apparatus according to any previous claim, wherein detecting the change further comprises determining that the difference is indicative of an object.

7. An apparatus according to claim 6, wherein the at least one memory and the computer program code are configured, with the at least one processor, to further cause the apparatus to determine a classification of the object.

8. An apparatus according to claim 6 or 7, wherein the at least one memory and the computer program code are configured, with the at least one processor, to further cause the apparatus to determine that the object is an obstacle.

9. An apparatus according to any previous claim, wherein the at least one memory and the computer program code are configured, with the at least one processor, to further cause the apparatus to determine the location at which the difference is detected based on the second sensing data and a model of the underground working area.

10. An apparatus according to any previous claim, wherein the apparatus is an on-board apparatus.

11. A method for monitoring an environment of a mining vehicle within an underground working area monitored by a monitoring system, the method comprising:
obtaining first sensing data regarding the environment of the mining vehicle, wherein the first sensing data comprises data relating to the environment of the mining vehicle upon approaching an area by the mining vehicle;
obtaining second sensing data regarding the environment of the mining vehicle, after obtaining the first sensing data, wherein the second sensing data comprises data relating to the environment of the mining vehicle upon passing the area by the mining vehicle;
performing a comparison of the first sensing data and the second sensing data;
detecting, based on the comparison of the first sensing data and the second sensing data, that the second sensing data comprises a difference compared to the first sensing data, wherein the difference is with respect to a location within the area; and
providing an indication regarding the difference to the monitoring system.

12. A method according to claim 11, wherein the first sensing data and the second sensing data are obtained during the mining vehicle driving along a route.

13. A method according to claim 11 or 12, wherein detecting the difference further comprises detecting that the difference corresponds to dimensions that are greater than predetermined dimensions.

14. A method according to any of claims 11 to 13, wherein detecting the change further comprises determining that the difference is indicative of an object.

15. A computer program comprising instructions for causing an apparatus, that is for monitoring an environment of a mining vehicle within an underground working area monitored by a monitoring system, to perform at least the following:
obtain first sensing data regarding the environment of the mining vehicle, wherein the first sensing data comprises data relating to the environment of the mining vehicle upon approaching an area by the mining vehicle;
obtain second sensing data regarding the environment of the mining vehicle, after obtaining the first sensing data, wherein the second sensing data comprises data relating to the environment of the mining vehicle upon passing the area by the mining vehicle;
perform a comparison of the first sensing data and the second sensing data;
detect, based on the comparison of the first sensing data and the second sensing data, that the second sensing data comprises a difference compared to the first sensing data, wherein the difference is with respect to a location within the area; and
provide an indication regarding the difference to the monitoring system.
